# EUROPÄISCHE PATENTSCHRIFT

(11) **EP 0 522 398 B1**
(45) Veröffentlichungstag und Bekanntmachung des Hinweises auf die Patenterteilung: **23.10.1996**
(21) Anmeldenummer: 92110960.9
(22) Anmeldetag: 29.06.1992
(51) Int. Cl.: A01N 47/12, A01N 47/18, A01N 47/20, A01N 43/653

(54) **Mikrobizide Wirkstoffkombinationen**
Microbicidal compositions
Compositions microbicides

(30) Priorität: 11.07.1991 DE 4122867
(43) Veröffentlichungstag der Anmeldung: 13.01.1993
(73) Patentinhaber: BAYER AG, 51368 Leverkusen (DE)
(72) Erfinder: Ludwig, Georg-Wilhelm, Dr., W-4150 Krefeld (DE); Exner, Otto, Dr., W-4030 Ratingen 1 (DE); Büchel, Karl-Heinz, Dr., W-5093 Burscheid (DE); Holmwood, Graham, Dr., W-5600 Wuppertal 11 (DE)

(56) Entgegenhaltungen:
- EP-A- 0 258 030
- EP-A- 0 266 110
- FR-A- 2 607 669
- GB-A- 2 059 773
- GB-A- 2 138 292

## Beschreibung

Die vorliegende Erfindung betrifft neue mikrobizide, synergistische Wirkstoffkombinationen aus bekannten Azol- und Iodpropargyl-Derivaten.

Imidazol- und Triazolfungizide, wie z.B. das α-[2-(4-Chlorphenyl)-ethyl)-α-(1,1-dimethyl-ethyl]-1H-1,2,4-triazol-1-ethanol (Tebuconazol) und das 1-[[2-(2,4-Dichlorphenyl)-4-n-propyl-1,3-dioxolan-2-yl]-methyl-]-1H-1,2,4-triazol (Propiconazol) und deren Verwendung zum Schutz von Pflanzen und Saatgut sind bekannt (vgl. z.B. EP-A-0 040 345, EP-A 0 052 424). Weiterhin ist bekannt, daß diese Verbindungen auch zum Schutz vor Mikroben in technischen Material eingesetzt werden können (vgl. DE-OS 3 905 378, DE-OS 3 621 494).

Weiterhin ist bekannt, daß Iodpropargyl-Derivate, wie z.B. das 3-Iod-2-propinyl-n-butylcarbamat (IPBC), für den Einsatz im Materialschutz geeignet sind (vgl. DE-OS 2.433.410).

Nachteil dieser beiden Verbindungsklassen ist, daß deren Wirkhöhe und Wirkspektrum nicht immer zum Schutz von technischen Materialien, insbesondere nicht zum Schutz von Kunststoffen ausreicht, da es, bedingt durch die erforderlichen hohen Aufwandmengen z.B. von IPBC zu Verfärbungen der Kunststoffe kommt.

Es wurde nun gefunden, daß Wirkstoffkombinationen aus mindestens einem Azol-Derivat, vorzugsweise
1-(4-Chlorphenoxy)-3,3-dimethyl-1-(1H-1,2,4-triazo-1-yl)-2-butanone (Triadimeton), β-(4-Chlorphenoxy)-α-(1,1-dimethyl-ethyl)-1H-1,2,4-triazol-1-ethanol (Triadimenol), ± -α-[2-(4-Chlorphenyl)-ethyl]-α-(1,1-dimethylethyl)-1H-1,2,4-triazol-1-ethanol (Tebuconazol), (RS)-2-(2,4-Dichlorphenyl)-1-(1H-1,2,4-triazol-1-yl)-hexan-2-ol (Hexaconazole),1-(N-propyl-N-(2-(2,4,6-(trichlorphenoxy)-ethyl)-carbamoyl)-imidazol (Prochloraz), 1-(2-Chlorphenyl)-2-(1-chlorcyclopropyl)-3-(1,2,4-triazol-1-yl)-propan-2-ol, deren Metallsalze oder Säureadditionsverbindungen und in den Fällen, in denen Verbindung ein asymmetrisches Kohlenstoffatom hat, auch die Isomeren und Isomerengemische der verschiedensten Zusammensetzungen;
ganz besonders bevorzugt das ± α-[2-(4-Chlorphenyl)-ethyl]-α-(1,1-dimethylethyl)-1H-1,2,4-triazol-1-ethanol (Tebuconazol)
mit mindestens einem Iodpropargyl-Derivat der Formel (I)

IC≡C-CH₂-O-CO-NH-R (I)

in welcher
- R: für geradkettiges oder verzweigtes Alkyl mit 1 bis 6 Kohlenstoffatomen, für Cycloalkyl mit 3 bis 6 Kohlenstoffatomen oder für Aryl, bevorzugt Phenyl steht,
eine besonders hohe mikrobizide Wirksamkeit aufweisen.

Als Iodpropargyl-Derivate seien vorzugsweise genannt:
3-Iod-2-propinyl-n-butylcarbamat (IPBC)
3-Iod-2-propinyl-n-hexylcarbamat
3-Iod-2-propinyl-cyclohexylcarbamat und
3-Iod-2-propinyl-phenylcarbamat,
ganz besonders bevorzugt ist das
3-Iod-2-propinyl-n-butylcarbamat (IPBC).

Besonders bevorzugt ist das 3-Iod-2-propinyl-n-butylcarbamat (IPBC).

Ganz besonders hervorzuheben ist die Kombination aus Tebuconazol und IPBC.

Überraschenderweise ist die mikrobizide, insbesondere die fungizide Wirksamkeit der erfindungsgemäßen Wirkstoffkombinationen wesentlich höher als die Summe der Wirkungen der einzelnen Wirkstoffe. Es liegt also ein echter synergistischer Effekt vor. Die Wirkstoffkombinationen stellen eine wertvolle Bereicherung der Technik dar, insofern als das oben beschriebene Verfärbungsrisiko deutlich verringert wird.

Die Azolderivate können nicht nur in Form von freien Basen sondern vorzugsweise auch in Form ihrer Metallsalz-Komplexe oder als Säureadditions-Salze vorliegen. Als Metallsalz kommen vorzugsweise Salze von Metallen der II. bis IV. Hauptgruppe und der I. und II. sowie IV. bis VII. Nebengruppe des Periodensystems in Frage, wobei Kupfer, Zink, Mangan, Magnesium, Zinn, Eisen, Calcium, Aluminium, Blei, Chrom, Kobalt und Nickel, beispielhaft genannt seien.

Als Anionen der Salze kommen solche in Betracht, die sich vorzugsweise von folgenden Säuren ableiten: Halogenwasserstoffsäuren, wie z.B. Chlorwasserstoffsäure und Bromwasserstoffsäure, ferner Phosphorsäure, Salpetersäure und Schwefelsäure.

Die Metallsalz-Komplexe können in einfacher Weise nach üblichen Verfahren erhalten werden, so z.B. durch Lösen des Metallsalzes in Alkohol, z.B. Ethanol und Hinzufügen zum Azolderivat. Man kann Metallsalz- Komplexe in bekannter Weise, z.B. durch Abfiltrieren isolieren und gegebenenfalls durch Umkristallisieren reinigen.

Zur Herstellung von Säureadditionssalzen kommen vorzugsweise folgende Säuren in Frage: Die Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydroxycarbonsäuren, wie z.B. Essigsäure, Propionsäure, Buttersäure, Mandelsäure, Oxalsäure, Bernsteinsäure, 2-Hydroxy-ethan-dicarbonsäure, Maleinsäure, Fumarsäure, Weinsäure, Citronensäure, Salicylsäure, Sorbinsäure, Milchsäure sowie Sulfonsäuren, wie z.B. p-Toluolsulfonsäure, 1,5-Naphthalindisulfonsäure, Alkansulfonsäuren und gegebenenfalls substituierte Benzoesäuren.

Die Säureadditions-Salze der Verbindungen können in einfacher Weise nach üblichen Salzbildungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Die Gewichtsverhältnisse der Wirkstoffe in den Wirkstoffkombinationen können in relativ großen Bereichen variiert werden.

Die Mischungen enthalten die Azolkomponente in Mengen von 1 bis 99 Gew.-%, der Rest zu 100 % ist die Iodpropargylkomponente.

Das Mischungsverhältnis Azolkomponente zu Iodpropargylkomponente ist vorzugsweise 1:9 bis 9:1, besonders bevorzugt 2:8 bis 8:2 Gewichtsteile.

Die erfindungsgemäßen Wirkstoffkombinationen weisen eine starke Wirkung gegen Mikroorganismen auf. Die erfindungsgemäßen Wirkstoffkombinationen werden im Materialschutz zum Schutz technischer Materialien verwendet; sie sind vor allem wirksam gegen Schimmelpilze, kunststoffverfärbende und kunststoffzerstörende Pilze und Bakterien. Beispielhaft - ohne jedoch zu limitieren - seien die folgenden Gattungen von Mikroorganismen genannt:

Alternaria wie Alternaria tenuis, Aspergillus wie Aspergillus niger und Aspergillus terreus, Aureobasidium wie Aureobasidium pullulans, Chaetomium wie Chaetomium globosum, Cladosporium wie Cladosporium herbarum, Coniophora wie Coniophora puteana, Gliocladium wie Gliocladium virens, Lentinus wie Lentinus tigrinus, Paecilomyces wie Paecilomyces varioti, Penicillium wie Penicillium brevicaule, Penicillium glaucum und Penicillium pinophilum, Polyporus wie Polyporus versicolor, Sclerophoma wie Sclerophoma pityophila, Streptoverticillium wie Streptoverticillium reticulum, Trichoderma wie Trichoderma viride, Trichophyton wie Trichophyton mentagrophytes;

Escherichia wie Escherichia coli, Pseudomonas wie Pseudomonas aeruginosa, Staphylococcus wie Staphylococcus aureus;
Candida wie Candida albicans.

Die Menge der eingesetzten Wirkstoffkombinationen ist von der Art und dem Vorkommen der Mikroorganisme, der Keimzahl und von dem Medium abhängig. Die optimale Einsatzmenge kann bei der Anwendung jeweils durch Testreihen ermittelt werden. Im allgemeinen ist es jedoch ausreichend 0,001 bis 5 Gew.-%, vorzugsweise 0,05 bis 2 Gew.-% der Wirkstoffgemische, bezogen auf das zu schützende Material, einzusetzen.

Die neuen Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit einem Lösungs- bzw. Verdünnungsmittels sowie gegebenenfalls weiteren Verarbeitungshilfsmitteln wie z.B. Emulgatoren und Dispergatoren.

Als Lösungs- bzw. Verdünnungsmittels kommen vorzugsweise alle für die Verarbeitung von Kunststoffen verwendeten Lösungs- bzw. Verdünnungsmittel in Frage.

Unter Kunststoffen wird hierbei eine Vielzahl unterschiedlicher polymerer Stoffe verstanden wie thermoplastische Polymere, Duroplaste, Elastomere sowie natürlich vorkommende Polymere.

Thermoplaste umfassen Polyolefine wie z.B. Polyethylen, Polypropylen und Polybutylen, Polyvinylchlorid(-modifikationen), Polystyrol und Styrol-Copolymerisate, Acrylstyrol und Styrol-Copolymerisate, Acrylharze, Fluorpolymere, Polyamide, Polycarbonate, Polyester wie z.B. Polyethylenterephthalat, Polyethylennaphthalat, lineare Epoxidharze und Blends hieraus.

Duroplaste umfassen Formaldehydharze wie z.B. Phenol-Formaldehydharze, ungesättigte Polyesterharze, Silikonharze, Polyimide, Epoxidharze und vernetzte Polyurethane wie PUR-Schäume, PUR-Gießharze, PUR-Lacke und PUR-Klebstoffe. Elastomere sind Kautschuke wie z.B. Naturkautschuke, Isoprenkautschuk, Styrol-Butadienkautschuk, Butadien- und Chloroprenkautschuk sowie Polyurethan-Elastomere.

Die Einarbeitung der Wirkstoffkombinationen erfolgt in allgemein üblicher Art und Weise z.B. durch Vermischen der Wirkstoffkombination oder der einzelnen Wirkstoffkomponenten mit den für die Polymerisation notwendigen Ausgangsstoffen, Lösungsmitteln und/oder Additiven.

Ferner richtet sie sich vorteilhafterweise nach der Art und Herstellungsweise des jeweiligen Kunststoffmaterials. Ohne zu limitieren seien hier z.B. genannt die Einarbeitungen in PVC-Systeme und Polyurethansysteme.

Im Falle von PVC-Systemen erfolgt die Einarbeitung vorteilhaft durch direkte Zugabe der Wirkstoffkombination als solche bei der Compoundierung. Alternativ können die Wirkstoffkomponente oder die Wirkstoffkombination als "Masterbatch" in mit dem System verträglichen Lösemitteln oder in einem der verwendeten Weichmacher oder sonstigen geeigneten Additiven eingesetzt werden.

Als Lösemittel kommen beispielsweise in Frage: Aliphatische und araliphatische Alkohole wie z.B. Isodecyclalkohol, 2-Ethylhexanol, 2-Ethyl-1,3-hexandiol, Benzylalkohol, Phenethylalkohol und Phenoxyethanol.

Beispiele für Weichmacher sind Phthalsäureester wie z.B. Di-(2-ethylhexyl)phthalat, Dicyclohexylphthalat, Diisobutylphthalat, Diisodecylphthalat, gemischte n-Alkylphthalate, Butylbenzylphthalat, Di-n-octylphthalat, Di-n-decylphthalat, Phosphorsäureester wie z.B. Tricresylphosphat, Diphenylcresylphosphat, Alkyl-aryl-phosphate, Carbonsäureester wie Dioctyladipat, Dipropylenglykoldibenzoat, Dioctylazelat, epoxydiertes Sojabohnenöl.

Im Falle von Polyurethansystemen erfolgt die Einarbeitung vorteilhaft vor der Polymerisation durch direkte Zugabe der Wirkstoffkombination zu einer Komponente. Alternativ können die Komponenten des Polyurethan-Systems wie Polyole, Isocyanat-Komponenten oder Vernetzersysteme mit der Wirkstoffkombination ausgerüstet werden. Prinzipiell können die einzelnen Komponenten des Wirkstoffgemischs auch in verschiedenen Bestandteilen des Polyurethan-Systems vorgelegt werden.

Die Wirksamkeit und das Wirkungsspektrum der erfindungsgemäßen Wirkstoffkombinationen beziehungsweise den daraus herstellbaren Mitteln, Konzentraten oder ganz allgemein Formulierungen kann erhöht werden, wenn gegebenenfalls weitere antimikrobiell wirksame Verbindungen, Fungizide, Bakterizide, Herbizide, Insektizide oder andere Wirkstoffe zur Vergrößerung des Wirkungsspektrums oder Erzielung besonderer Effekte wie z.B. dem zusätzlichen Schutz vor Insekten zugesetzt werden. Diese Mischungen können ein breiteres Wirkungsspektrum besitzen als die erfindungsgemäßen Verbindungen.

In vielen Fällen erhält man dabei synergistische Effekte, d.h. die Wirksamkeit der Mischung ist größer als die der Wirksamkeit der Einzelkomponenten. Besonders günstige Mischungspartner sind z.B. die folgenden Verbindungen:
Sulfenamide wie Dichlofluanid (Euparen), Tolylfluanid (Methyleuparen), Folpet, Fluorfolpet;
Benzimidazole wie Carbendazim (MBC), Benomyl, Fuberidazole, Thiabendazole oder deren Salze;
Thiocyanate wie Thiocyanatomethylthiobenzothiazol (TCMTB), Methylenbisthiocyanat (MBT);
quartäre Ammoniumverbindungen wie Benzyldimethyltetradecylammoniumchlorid, Benzyl-dimethyl-dodecyl-ammoniumchlorid, Didecyl-dimethyl-ammoniumchlorid;
Morpholinderivate wie C₁₁-C₁₄-4-Alkyl-2,6-dimethylmorpholin-homologe (Tridemorph), Falimorph, (±)-cis-4-[3-tert.Butylphenyl)-2-methylpropyl] -2,6-dimethylmorpholin (Fenpropimorph), Carbamorph;
Phenole wie o-Penylphenol, Tribromphenol, Tetrachlorphenol, Pentachlorphenol, 3-Methyl-4-chlorphenol, Dichlorphen, Chlorophen oder deren Salze;
Bromderivate wie Bronopol;
Isothiazolinone wie N-Methylisothiazolin-3-on, 5-Chloro-N-methylisothiazolin-3-on, 4,5-Dichloro-N-octylisothiazolin-3-on, N-Octylisothiazolin-3-on (Octhilinone);
Benzisothiazolinone, Cyclopentenisothiazolinone;
Pyridine wie 1-Hydroxy-2-pyridinthion (und ihre Na-,Fe-, Ma, Zn-Salze), Tetrachlor-4-methylsulphonylpyridin;
Metallseifen wie Zinn-, Kupfer-, Zink-naphthenat, -octoat, -2-ethylhexanoat, -oleat, -phosphat, -benzoat, Oxide wie TBTO, Cu₂O, CuO, ZnO;
Organische Zinnverbindungen wie Tributylzinn-naphthenat und Tributylzinnoxid;
Dialkyldithiocarbamate wie Na- und Zn-Salze von Dialkyldithiocarbamaten, Tetramethyldiuramdisulfid (TMTD);
Nitrile wie 2,4,5,6-Tetrachlorisophthalonitril (Chlorthalonil) u.a. Mikrobizide mit aktivierten Halogengruppen wie Cl-Ac, MCA, Tectamer, Bronopol, Bromidox;
Benzthiazole wie 2-Mercaptobenzothiazol; s.o. Dazomet;
Chinoline wie 8-Hydroxychinolin oder dessen halogenierte Derivate wie Haloquinal, Broxychinolin oder Cliogrinal;
Formaldehydabspaltende Verbindungen wie Benzylalkoholmono(poly)hemiformal, Oxazolidine, Hexahydro-s-triazine, N-Methylolchloracetamid;
Tris-N-(Cyclohexyldiazeniumdioxy)-Aluminium N-(Cyclohexyldiazeniumdioxy)-Tributylzinn bzw. K-Salze, Bis-(N-cyclohexyl)diazinium (-dioxy- Kupfer oder Aluminium);
Schwefel und Schwefelprodukte wie z.B. anorganische Polysulfide, Schwefel, Azithiram.

Als Insektizide werden bevorzugt zugesetzt:
Phosphorsäureester wie Azinphos-ethyl, Azinphos-methyl, 1-(4-Chlorphenyl)-4-(O-ethyl, S-propyl)phosphoryloxypyrazol (TIA-230), Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichlorphon;
Carbamate wie Aldicarb, Bendiocarb, BPMC (2-(1-Methylpropyl)phenylmethylcarbamat), Butocarboxim, Butoxicarboxim, Carbaryl, Carbofuran, Carbosulfan, Cloethocarb, Isoprocarb, Methomyl, Oxamyl, Pirimicarb, Promecarb, Propoxur und Thiodicarb;
Pyrethroide wie Allethrin, Alphamethrin, Bioresmethrin, Byfenthrin (FMC 54 800), Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluormethylvinyl)cyclopropancarboxylat, Fenpropathrin, Fenfluthrin, Fenvalerate, Flucythrinate, Flumethrin, Fluvalinate, Permethrin und Resmethrin;
Nitroimino und Nitromethylene wie 1-[(6-Chlor-3-pyridinyl)-methyl]-4,5-dihydro-N-nitro-1H-imidazol-2-amin (Imidacloprid).

Als andere Wirkstoffe kommen auch in Betracht Algizide, Molluskizide, Wirkstoffe gegen "sea animals", die sich auf z.B. Schiffsbodenanstrichen ansiedeln.

### Beispiel A

1. Synergistisches Fungizidgemisch aus Tebuconazol und 3-Iod-2-propinyl-n-butylcarbamat (IPBC)
   90 Gew.-Teile Tebuconazole und 10 Gew.-Teile IPBC werden als Feststoffe innig vermischt oder in einer geeigneten Mühle zusammen vermahlen. Es resultiert das synergistische Fungizidgemisch als weißes Pulver.
   Analog können Gemische der übrigen Mischungsverhältnisse der Komponenten hergestellt werden.
2. Synergistische Wirksamkeit der erfindungsgemäßen Wirkstoffe gegen kunststoffzerstörende Pilze.
   Die synergistische Wirksamkeit der erfindungsgemäßen Wirkstoffmischungen kann durch den Vergleich der Wirksamkeit der reinen Wirkstoffe mit denen der Gemische erfolgen.

### Herstellung des Prüfmaterials:

1 % der Wirkstoffkombination wird bei Raumtemperatur in den zur Polyurethanherstellung verwendeten Polyesterpolyol eingerührt. Nach Zugabe des Vernetzers wird mit der Isocyanatkomponente umgesetzt. Es resultiert eine 1 cm dicke Platte aus PU-Schaum.

Zur mikrobiologischen Untersuchung wird die Platte auf 2 mm Dicke gespalten und eine mikrobiologische Prüfung nach Schweizer Prüfnorm SNV 195921 durchgeführt.

Hierzu werden runde Prüfkörper ausgestanzt (⌀ 3 cm). Diese werden nach Sterilisieren auf einen Agar aufgelegt, der aus einer unteren, nicht kontaminierten und einer oberen, kontaminierten Agarschicht besteht. Bei 26°C wird 4 Wochen bebrütet.

Auswertung:

Das Ausmaß des Bewuchses der Prüfkörper durch die Mikroorganismen sowie die Größe der bewuchsfreien Zone um den Prüfkörper (Hemmhof) sind ein Maß für die mikrobiologische Wirksamkeit (s. folgendes Bewertungsschema).

Das Ergebnis für das synergistische Fungizidgemisch aus 90 % Tebuconazol + 10 % IPBC s. Tabelle 1.

| Bewertungsschema | | | |
|---|---|---|---|
| Hemmzone in mm | Bewuchs¹) | Beschreibung | Bewertung |
| n bis 1 | kein | mehr als 1 mm Hemmzone, kein Bewuchs mehr | gute Wirkung, ausgeprägte Hemmzone²) |
| 1 bis 0 | kein | bis 1 mm Hemmzone, kein Bewuchs mehr | gute Wirkung²) |
| 0 | kein | keine Hemmzone, kein Bewuchs | gute Wirkung³) |
| 0. | schwach | keine Hemmzone, nahezu fehlender Bewuchs | Wirkungsgrenze ungenügende Wirkung |
| 0.. | mittel | keine Hemmzone, im Vergleich zur Kontrolle etwa auf die Hälfte reduzierter Bewuchs | ungenügend |
| 0... | voll | keine Hemmzone, im Vergleich zur Kontrolle nicht oder nur schwach reduzierter Bewuchs | ungenügend |

| | | | |
|---|---|---|---|
| ¹) Mit Bewuchs ist die Bakterien- oder Schimmelpilzbesiedlung im Nährboden bei Bakterien unter bzw. bei Schimmelpilzen auf oder unter dem Prüfling gemeint. | | | |
| ²) Der Größe der Hemmzone darf nur bedingte Bedeutung geschenkt werden. Eine große Hemmzone kann gewisse Wirkstoffreserven oder eine schwache Fixierung eines Präparates auf dem Substrat anzeigen. | | | |
| ³) Bei fehlendem Bewuchs ist die Wirkung trotz fehlender Hemmzone als gut zu bewerten, da die Ausbildung einer Hemmzone eventuell infolge eines geringen Diffusionsvermögens der Wirksubstanz verhindert werden. | | | |

**Tabelle 1**

| Beispiel A Agar-Diffusions-Test nach Schweizer Prüfnorm SNV 195 921 PU-Prüfkörper mikrobizid ausgerüstet mit | | | | |
|---|---|---|---|---|
| Konzentration Keime / im Polyesterpolyol | 0-Probe | Wirkstoff A 1 % | Mischung B 1 % | Wirkstoff C 0,2 % |
| Chaetomium globosum | 0. | 0. | 1-2 | 0. |
| Aspergillus niger | 0. | 0. | 2-4 | 0-1 |
| Aspergillus terreus | 0. | 0. | 0-2 | 0-1 |
| Trichophyton mntagrohytes | 0. | 0 | 1-7 | 0. |
| Cladosporium herbarum | 0. | 0. | 1-2 | 0. |
| Penicillium brevicaule | 0. | 0. | 0 | 0 |
| Wirkstoff A = Tebuconazol Mischung B = 90 Teile Tebuconazol / 10 Teile IPBC Wirkstoff C = IPBC | | | | |

## Patentansprüche

1. Wirkstoffkombination gemäß Anspruch 1, aus mindestens einem der folgenden Azol-Derivate:
1-(4-Chlorphenoxy)-3,3-dimethyl-1-(1H-1,2,4-triazo-1- yl)-2-butanon, β-(4-Chlorphenoxy)-α-(1,1-dimethyl-ethyl)-1H-1,2,4-triazol-1-ethanol, ± -α-[2-(4-Chlorphenyl)-ethyl]-α-(1,1- dimethylethyl)-1H-1,2,4-triazol-1-ethanol, (RS)-2-(2,4-Dichlorphenyl)-1-(1H-1,2,4-triazol-1-yl)-hexan-2-ol, 1-(N-propyl-N-(2-(2,4,6- (trichlorphenoxy)-ethyl)-carbamoyl)-imidazol, deren Metallsalze oder Säureadditionsverbindungen und in den Fällen, wo die Verbindung ein asymmetrisches Kohlenstoffatom hat, auch die Isomeren und Isomerengemische der verschiedensten Zusammensetzungen und
mindestens einem Iodpropargyl-Derivat der Formel (I)
I-C≡C-CH₂-O-CO-NH-R (I)
in welcher
R für geradkettiges oder verzweigtes Alkyl mit 1 bis 6 Kohlenstoffatomen, für Cyclokalkyl mit 3 bis 6 Kohlenstoffatomen oder für Aryl steht.

2. Wirkstoffkombination gemäß Anspruch 1 aus Tebuconazol und 3-Iod-2-propinyl-n-butylcarbamat.

3. Mikrobizide Mittel für den Materialschutz, enthaltend eine Wirkstoffkombination gemäß Anspruch 1, Lösungs- bzw. Verdünnungsmittel sowie gegebenenfalls Verarbeitungshilfsmittel und gegebenenfalls weitere Wirkstoffe.

4. Mikrobizide Mittel gemäß Anspruch 3, zum Schutz von Kunststoffen.

5. Verfahren zur Bekämpfung von Mikroorganismen, dadurch gekennzeichnet, daß man die Wirkstoffkombination gemäß Anspruch 1 auf Mikroben oder deren Lebensraum einwirken läßt.

6. Verwendung der Wirkstoffkombinationen gemäß Anspruch 1, als Mikrobizide zum Schutz von technischen Materialien.

7. Verwendung gemäß Anspruch 7 als Fungizide zum Schutz von Kunststoffen.

8. Verfahren zur Herstellung von mikrobiziden Mitteln, dadurch gekennzeichnet, daß man eine Wirkstoffkombination gemäß Anspruch 1, mit Lösungs- bzw. Verdünnungsmitteln und gegebenenfalls Verarbeitungshilfsmitteln sowie weiteren Wirkstoffen vermischt.

9. Kunststoffe, enthaltend eine Wirkstoffkombination gemäß Anspruch 1.

10. Verfahren zur Herstellung von Kunststoffen, dadurch gekennzeichnet, daß man eine Wirkstoffkombination gemäß Anspruch 1, oder die einzelnen Wirkstoffkomponenten mit den für die Polymerisation notwendigen Ausgangsstoffen, Lösungsmitteln und/oder Additiven vermischt.

## Claims

1. Combination of active compounds composed of at least one of the following azole derivatives:
1-(4-chlorophenoxy)-3,3-dimethyl-1-(1H-1,2,4-triazo-1-yl)-2-butanone, β-(4-chlorophenoxy)-α-(1,1-dimethyl-ethyl)-1H-1,2,4-triazole-1-ethanol, ± -α-[2-(4-chlorophenyl)-ethyl]-α-(1,1-dimethylethyl)-1H-1,2,4-triazole-1-ethanol, (RS)-2-(2,4-dichlorophenyl)-1-(1H-1,2,4-triazol-1-yl)-hexan-2-ol, 1-(N-propyl-N-(2-(2,4,6-(trichlorophenoxy)-ethyl)carbamoyl)-imidazole, their metal salts or acid addition compounds and in the cases where the compound has an asymmetric carbon atom, also the isomers and mixtures of isomers of the most varied compositions and
at least one iodopropargyl derivative of the formula (I)
I-C ≡ C-CH₂-O-CO-NH-R (I)
in which
R represents straight-chain or branched alkyl having 1 to 6 carbon atoms, cycloalkyl having 3 to 6 carbon atoms or aryl.

2. Combination of active compounds according to Claim 1 composed of tebuconazole and 3-iodo-2-propinyl-n-butylcarbamate.

3. Microbicidal composition for the protection of materials, containing a combination of active compounds according to Claim 1, solvents or diluents and, if required, processing aids and, if required, additional active compounds.

4. Microbicidal composition according to Claim 3, for the protection of plastics.

5. Method of combating microorganisms, characterized in that the combinations of active compounds according to Claim 1 are allowed to act on microbes or on their environment.

6. Use of the combinations of active compounds according to Claim 1 as microbicides to protect industrial materials.

7. Use according to Claim 7 as fungicides to protect plastics.

8. Process for the preparation of microbicidal compositions, characterized in that a combination of active compounds according to Claim 1 is mixed with solvents or diluents and, if required, processing aids and additional active compounds.

9. Plastics containing a combination of active compounds according to Claim 1.

10. Process for the preparation of plastics, characterized in that a combination of active compounds according to Claim 1, or the individual active components, are mixed with the starting materials, solvents and/or additives required for the polymerization.

## Revendications

1. Combinaison de substances actives consistant en au moins un des dérivés azoliques suivants :
1-(4-chlorophénoxy)-3,3-diméthyl-1-(1H-1,2,4-triazole-1-yl)-2-butanone, β-(4-chlorophénoxy)-α-(1,1-diméthyléthyl)-1H-1,2,4-triazole-1-éthanol, ±-α-[2-(4-chlorophénoxy)éthyl]-α-(1,1-diméthyléthyl)-1H-1,2,4-triazole-1-éthanol, (RS)-2-(2,4-dichlorophényl)-1-(1H-1,2,4-triazole-1-yl)-hexane-2-ol, 1-(N-propyl-N-(2-(2,4,6-(trichlorophénoxy)éthyl)carbamoyl)imidazole, leurs sels métalliques ou composés formés par addition avec des acides et, lorsque le composé contient un atome de carbone asymétrique, les isomères et mélanges d'isomères aux proportions les plus variées, et
au moins un dérivé iodopropargylique de formule (I)
IC≡C-CH₂-O-CO-NH-R (I)
dans laquelle
R représente un groupe alkyle à chaîne droite ou ramifiée en C₁-C₆, un groupe cycloalkyle en C₃-C₆ ou un groupe aryle.

2. Combinaison de substances actives selon la revendication 1, consistant en le Tebuconazol et le n-butylcarbamate de 3-iodo-2-propynyle.

3. Produits microbicides pour la protection des matières et matériaux, contenant une combinaison de substances actives selon la revendication 1, des solvants ou diluants et le cas échéant des produits auxiliaires de formulation et le cas échéant d'autres substances actives.

4. Produits microbicides selon la revendication 3, pour la protection des résines synthétiques.

5. Procédé pour combattre les micro-organismes, caractérisé en ce que l'on fait agir sur les microbes ou leur habitat la combinaison de substances actives selon la revendication 1.

6. Utilisation des combinaisons de substances actives selon la revendication 1 en tant que microbicides pour la protection des matières et matériaux techniques.

7. Utilisation selon la revendication 6 en tant que fongicides pour la protection des résines synthétiques.

8. Procédé pour la préparation de produits microbicides, caractérisé en ce que l'on mélange une combinaison de substances actives selon la revendication 1 avec des solvants ou diluants et le cas échéant des produits auxiliaires de formulation et d'autres substances actives.

9. Résines synthétiques contenant une combinaison de substances actives selon la revendication 1.

10. Procédé pour la préparation de résines synthétiques, caractérisé en ce que l'on mélange une combinaison de substances actives selon la revendication 1 ou les composants individuels actifs avec les produits de départ, solvants et/ou additifs nécessaires pour la polymérisation.
